# FASCICULE DE BREVET EUROPEEN

(11) **EP 0 669 609 B1**
(45) Date de publication et mention de la délivrance du brevet: **08.08.2001**
(21) Numéro de dépôt: 95400409.9
(22) Date de dépôt: 27.02.1995
(51) Int. Cl.: G11B 5/39

(54) **Tête magnétique de lecture à élément magnétorésistant et à moyens de polarisation perfectionnés**
Lesemagnetkopf mit magnetoresistivem Element und verbesserten Vormagnetisierungsmitteln
Magnetic read head with magnetoresistive element and improved biasing means

(30) Priorité: 28.02.1994 FR 9402258
(43) Date de publication de la demande: 30.08.1995
(73) Titulaire: COMMISSARIAT A L'ENERGIE ATOMIQUE, 75015 Paris (FR)
(72) Inventeur: Vieux-Rochaz, Line, F-38360 Sassenage (FR); Fedeli, Jean-Marc, F-38140 Beaucroissant (FR); Pougnet, Philippe, F-95490 Vaureal (FR); Poirier, Michel, F-95300 Pontoise (FR)
(74) Mandataire: Signore, Robert

(56) Documents cités:
- EP-A- 0 325 365
- WO-A-93/08562
- PATENT ABSTRACTS OF JAPAN vol. 10 no. 330 (P-514) [2386] ,11 Novembre 1986 & JP-A-61 134913 (MATSUSHITA ELECTRIC IND CO LTD) 23 Juin 1986,
- PATENT ABSTRACTS OF JAPAN vol. 7 no. 57 (P-181) [1202] ,9 Mars 1983 & JP-A-57 203226 (MITSUBISHI DENKI K. K.) 13 Décembre 1982,
- PATENT ABSTRACTS OF JAPAN vol. 8 no. 31 (P-253) ,9 Février 1984 & JP-A-58 185019 (HITACHI SEISAKUSHO K. K.) 28 Octobre 1983,
- PATENT ABSTRACTS OF JAPAN vol. 13 no. 185 (P-865) [3533] ,2 Mai 1989 & JP-A-01 013209 (NEC KANSAI LTD) 18 Janvier 1989,
- PATENT ABSTRACTS OF JAPAN vol. 6 no. 51 (P-108) ,6 Avril 1982 & JP-A-56 165923 (MATSUSHITA ELECTRIC IND CO LTD) 19 Décembre 1981,
- PATENT ABSTRACTS OF JAPAN vol. 11 no. 311 (P-625) ,12 Octobre 1987 & JP-A-62 102411 (VICTOR CO OF JAPAN LTD) 12 Mai 1987,
- PATENT ABSTRACTS OF JAPAN vol. 9 no. 334 (P-417) [2057] ,27 Décembre 1985 & JP-A-60 157712 (SONY K. K.) 19 Août 1985,
- PATENT ABSTRACTS OF JAPAN vol. 11 no. 253 (P-606) ,18 Août 1987 & JP-A-62 058411 (SONY CORP.) 14 Mars 1987,

## Description

### Domaine technique

La présente invention a pour objet une tête magnétique de lecture à élément magnétorésistant et à moyens de polarisation perfectionnés.

La tête de l'invention est avant tout une tête de lecture. Mais elle peut être équipée de moyens supplémentaires la rendant apte à une fonction d'écriture. L'invention trouve une application dans l'enregistrement magnétique ou dans la mesure des champs magnétiques.

### Etat de la technique antérieure

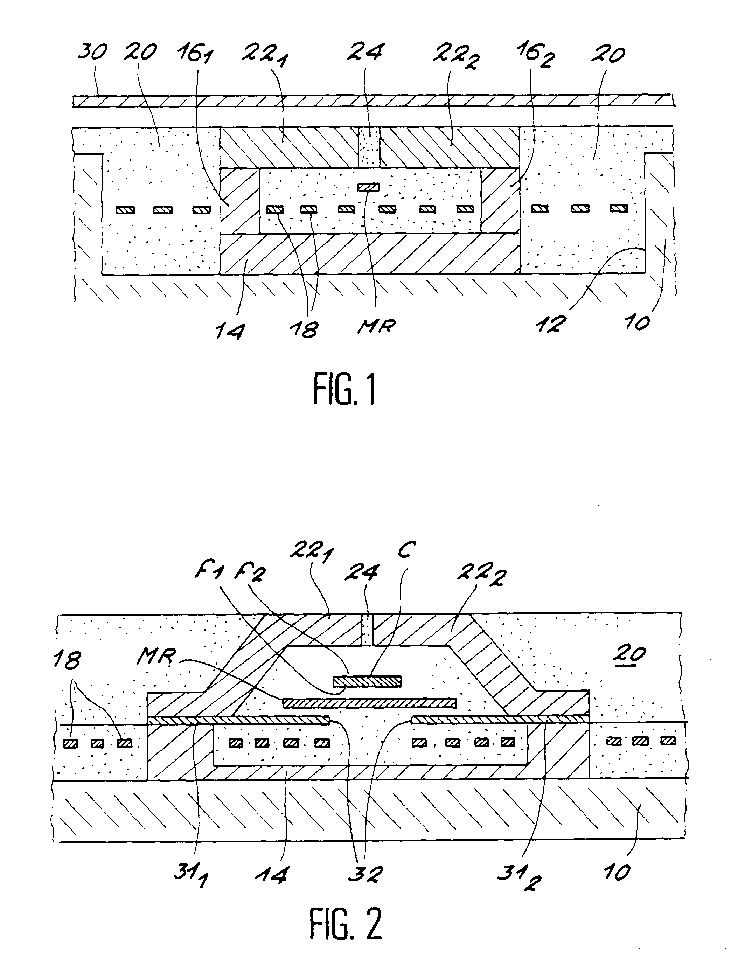

L'invention s'applique essentiellement aux têtes dites "horizontales à couches minces". Une telle tête est représentée sur la figure 1 annexée. On y voit un substrat semiconducteur 10, par exemple en silicium, dans lequel a été gravé un caisson 12. Dans ce caisson, une couche magnétique inférieure 14 a été formée électrolytiquement et a été prolongée par deux piliers verticaux 16₁, 16₂. Un bobinage 18 entoure ces piliers. Il est noyé dans une couche isolante 20. Le circuit magnétique se complète par deux pièces polaires supérieures 22₁, 22₂ séparées par un espaceur amagnétique 24 définissant l'entrefer de la tête. Un élément magnétorésistant MR, par exemple en fer-nickel, est disposé sous l'espaceur amagnétique 24. Cet élément est obtenu par photogravure, en prenant l'espaceur comme masque. Il est donc autoaligné par rapport à l'espaceur. Des moyens non représentés sont prévus pour faire passer un courant dans cet élément magnétorésistant MR et pour mesurer ses variations de résistance (variation de courant à tension constante ou vice versa). La tête se déplace devant un support magnétique 30 (bande, disque, ...) où sont enregistrées les informations à lire ou à écrire.

Le fonctionnement d'une telle tête est schématiquement le suivant.

A l'écriture, le courant circulant dans le bobinage 18 crée un champ magnétique et, par conséquent, une induction dans le circuit magnétique. Les lignes de champ qui s'épanouissent autour de l'espaceur induisent une aimantation dans le support 30.

A la lecture, une information magnétique enregistrée dans le support 30 produit un champ magnétique de lecture et, par conséquent, une induction dans le circuit magnétique. Cette induction se referme, en partie, à travers l'élément magnétorésistant MR. Il en résulte une aimantation dans cet élément, qui va provoquer une variation de sa résistance.

Une telle tête est décrite dans les documents FR-A-2 645 314 et FR-A-2 657 189.

Un autre type de tête magnétique connu est illustré sur la figure 2. Cette tête comprend des éléments déjà représentés sur la figure 1 et qui portent les mêmes références numériques. La tête représentée se distingue de celle de la figure 1 par la présence de deux couches magnétiques 31₁, 31₂ écartées l'une de l'autre et en contact avec les pièces polaires supérieures. Ces couches définissent un autre entrefer 32, disposé sous l'entrefer principal 24. L'élément magnétorésistant MR est disposé à proximité et en travers de cet autre entrefer 32.

Sur la figure 2 est représenté également un conducteur électrique C, qui sert de moyen de polarisation de l'élément magnétorésistant MR. Ce conducteur C est parcouru par un courant électrique dirigé perpendiculairement au plan de la figure. Le conducteur C présente une face f1 en regard de l'élément magnétorésistant MR et une face f2 opposée à cet élément. Une telle tête est décrite dans la demande de brevet français n°93 13249 déposée le 8 novembre 1993.

D'autres têtes encore sont connues, comme celles qui sont divulguées par le document FR-A-2 657 189 déjà cité. Ces têtes présentent un circuit magnétique simplifié avec seulement deux pièces polaires supérieures, ou avec deux pièces polaires supérieures et une pièce polaire inférieure celle-ci étant sans contact avec les pièces polaires supérieures (cf figures 3 et 4 de ce document). Dans ces deux cas, il existe un élément magnétorésistant situé sous l'entrefer et un conducteur de polarisation parcouru par un courant. Le préambule de la revendication est basé sur ce document.

Le document JP-A-61 134 913 décrit une tête magnétique verticale avec un circuit magnétique dont une branche contient un élément magnétorésistant associé à une couche magnétique qui sert, en même temps, de conducteur de polarisation.

Dans tous les cas, le courant circulant dans le conducteur de polarisation crée un champ magnétique qui se referme à travers l'élément magnétorésistant et qui se superpose au champ à lire. Le champ de polarisation est en général réglé pour que les variations de résistance de l'élément magnétorésistant soient linéaires en fonction des variations du champ à lire.

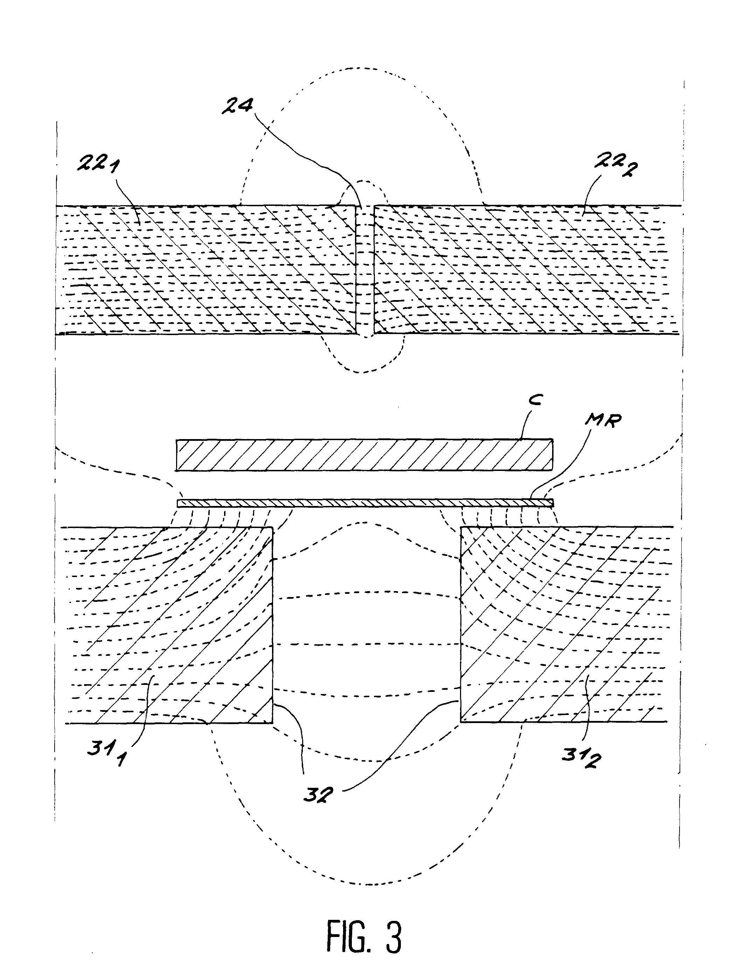

Bien que donnant satisfaction à certains égards, ces têtes présentent un inconvénient. En effet, le champ magnétique créé par le courant circulant dans le conducteur de polarisation est capté par le circuit magnétique de la tête. Autrement dit, il a tendance à emprunter ce circuit magnétique pour se refermer. La figure 3 annexée montre les lignes de ce champ dans la zone des deux entrefers (l'entrefer principal 24 et l'autre entrefer 32) pour une tête connue conforme à celle de la figure 2. On voit que le champ passe, certes, dans l'élément magnétorésistant, mais qu'il emprunte aussi le circuit magnétique. Il va donc produire un champ parasite constant qui va entraîner une modification des informations enregistrées sur le support et apporter une asymétrie dans la forme du signal de lecture.

L'invention a justement pour but de remédier à cet inconvénient.

### Exposé de l'invention

A cette fin, l'invention propose un perfectionnement des moyens de polarisation de l'élément magnétorésistant. Ce perfectionnement entraîne à la fois une baisse du courant nécessaire à la polarisation et une diminution du champ parasite créé dans l'entrefer.

Ce but est atteint par l'utilisation d'une couche magnétique supplémentaire disposée sur le conducteur de polarisation, côté opposé à l'élément magnétorésistant. Cette couche a pour effet de canaliser le champ magnétique créé par le conducteur, champ qui, sans cette disposition, irait vers l'entrefer principal.

Par ailleurs, le courant de détection qui parcourt l'élément magnétorésistant et qui sert à mesurer la variation de résistance de cet élément, crée lui aussi un champ magnétique, lequel sera également attiré par la couche magnétique supplémentaire. Il en résultera une augmentation de l'aimantation de cette couche et, en conséquence et par effet miroir, une augmentation de la polarisation de l'élément magnétorésistant. L'effet produit par l'adjonction de la couche magnétique est donc doublement bénéfique.

Grâce à l'invention, on peut ainsi diminuer le courant de polarisation d'environ 20%, ce qui réduit d'autant les pertes JOULE et l'échauffement de la tête. Le fait que la couche magnétique soit en contact avec la couche conductrice augmente encore l'efficacité de la disposition.

La couche magnétique supplémentaire est de préférence réalisée en un matériau magnétique doux. Il peut s'agir d'alliages à base de fer, comme le fer-nickel ou le Sendust (marque déposée) qui est un alliage de 85% de fer, 5,4% d'aluminium et 9,6% de silicium en masse, ou bien d'alliages à base de cobalt comme l'alliage cobalt-zirconium-niobium. Son épaisseur peut être comprise entre 100 et 500 nm, de préférence voisine de 200 nm. Sa largeur est sensiblement égale à la largeur du conducteur de polarisation. La présence de cette couche magnétique supplémentaire ne complique pas le procédé de réalisation de la tête puisque l'ensemble conducteur-couche magnétique peut être réalisé en une seule gravure.

L'invention peut s'appliquer à n'importe quelles têtes de lecture, notamment à celles qui ont été décrites plus haut, où à celles à venir qui utiliseront un élément magnétorésistant et un conducteur de polarisation.

### Brève description des dessins

- la figure 1, déjà décrite, montre une tête horizontale connue à élément magnétorésistant ;
- la figure 2, déjà décrite, montre une autre tête magnétique à élément magnétorésistant et à conducteur de polarisation ;
- la figure 3, déjà décrite, montre les lignes de champ magnétique de polarisation dans une tête telle que celle de la figure précédente ;
- la figure 4 montre la nouvelle répartition des lignes de champ dans le cas de l'invention ;
- la figure 5 montre une tête magnétique d'un type connu à élément magnétorésistant longitudinal, perfectionnée selon l'invention ;
- la figure 6 est une coupe illustrant un mode de réalisation compact de l'ensemble élément magnétorésistant-conducteur de polarisation-couche magnétique supplémentaire ;
- les figures 7a à 7c montrent diverses étapes d'un procédé de réalisation de l'ensemble élément magnétorésistant-conducteur de polarisation-couche magnétique supplémentaire ;
- la figure 8 montre encore une autre tête magnétique d'un type connu perfectionnée selon l'invention ;
- la figure 9 montre encore une autre tête magnétique d'un type connu perfectionnée selon l'invention ;
- la figure 10 illustre un mode de réalisation où la magnétorésistance et ses moyens de polarisation sont situés sous le second entrefer.

### Exposé détaillé de modes de réalisation

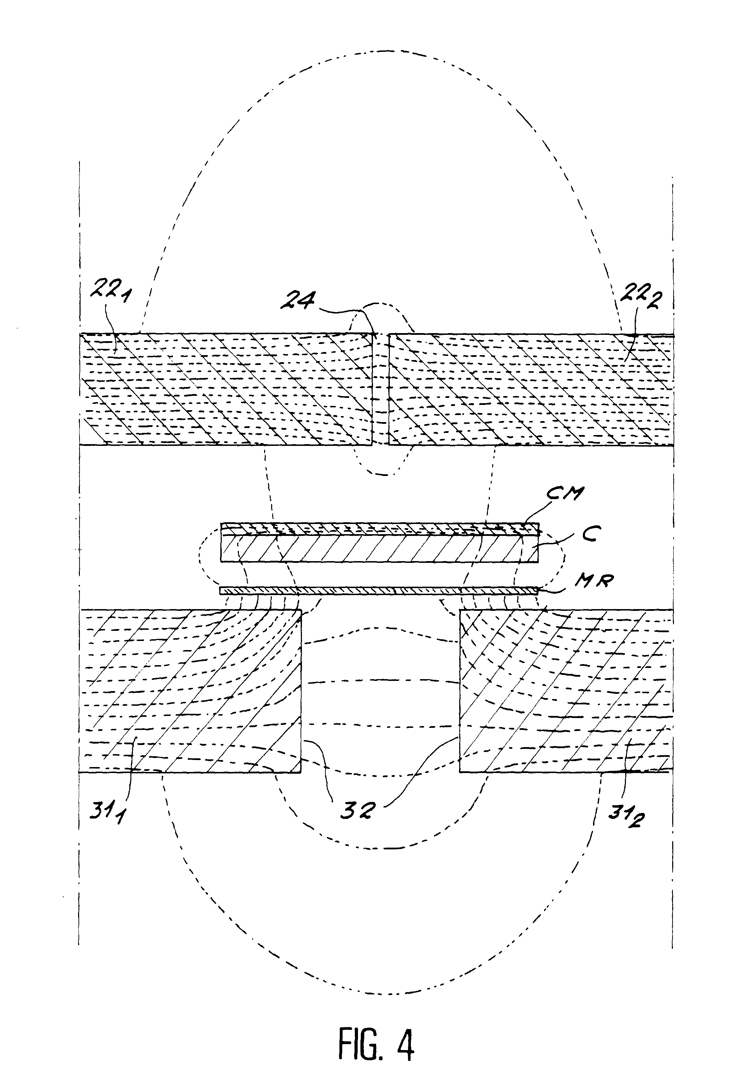

La figure 4 correspond à la figure 3 déjà décrite et montre, en coupe, la partie centrale d'une tête magnétique de lecture avec deux pièces polaires supérieures 22₁, 22₂, un entrefer 24, des couches magnétiques 31₁, 31₂ définissant un second entrefer 32, un élément magnétorésistant MR avec son conducteur de polarisation C. La tête représentée sur la figure 4 se distingue de celle de la figure 3 par la présence d'une couche magnétique supplémentaire CM. On voit que les lignes de champ de polarisation sont canalisées par la couche supplémentaire CM. Les lignes de champ sont resserrées dans la zone du conducteur de polarisation, ce qui réduit la fuite vers les pièces polaires supérieures 22₁, 22₂.

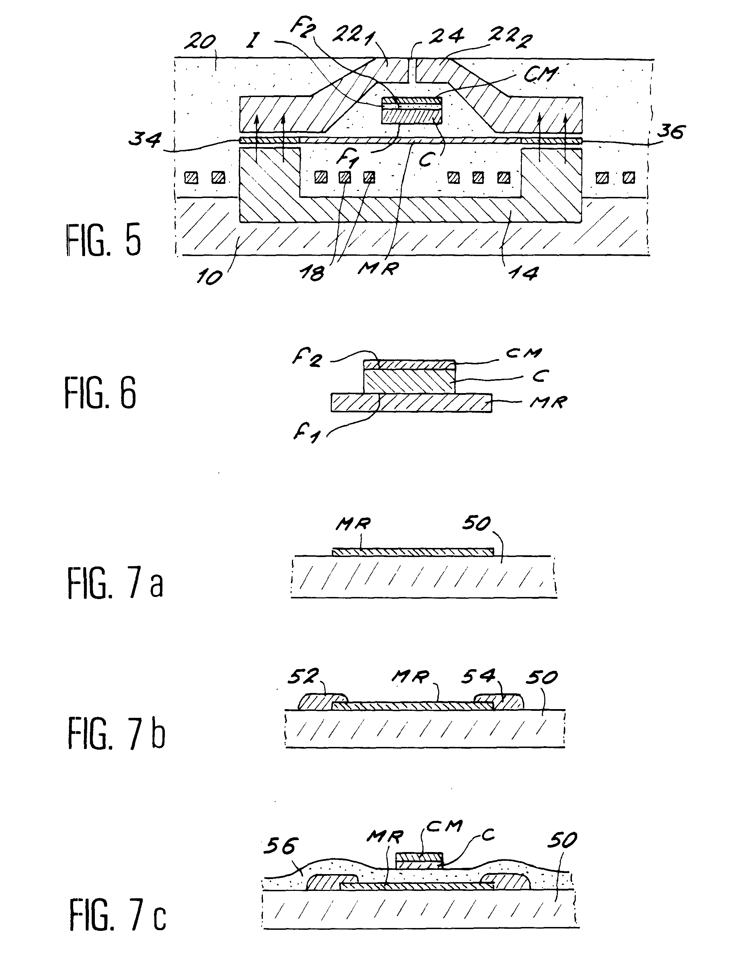

La figure 5 montre une tête magnétique de lecture et d'écriture qui est d'un type connu (décrit dans la demande de brevet français n° EN 93 13252 déposée le 8 novembre 1993). Cette tête se distingue des autres par le fait que l'élément magnétorésistant MR s'étend d'une pièce polaire 22₁ à l'autre 22₂. Cet élément est relié à deux plots de contact 34, 36 situés aux extrémités, ces plots étant eux-mêmes reliés à des moyens (non représentés) aptes à engendrer un courant circulant dans l'élément magnétorésistant MR. Cet élément est, dans ce cas particulier, un matériau multicouche et sa section droite est inférieure à celle des pièces polaires supérieures, afin d'obtenir un effet de concentration du champ de lecture.

La tête de la figure 5 est perfectionnée dans ses moyens de polarisation de l'élément magnétorésistant. Ces moyens comprennent non seulement un conducteur de polarisation C mais aussi une couche magnétique supplémentaire CM. Dans la variante illustrée, la couche magnétique supplémentaire est séparée du conducteur C par une couche isolante électrique et amagnétique I. Cette couche peut être en SiO₂ ou en Si₃N₄ par exemple.

Sur la figure 6, on voit, en coupe, un mode de réalisation dans lequel l'ensemble élément magnétorésistant MR-conducteur de polarisation C-couche magnétique supplémentaire CM est compact, les trois éléments étant en contact les uns avec les autres. L'élément conducteur C a sa face f1 en contact avec l'élément magnétorésistant MR et sa face f2 en contact avec la couche magnétique CM.

Les figures 7a à 7c illustrent quatre étapes d'un mode particulier de réalisation d'un élément magnétorésistant et de ses moyens de polarisation perfectionnés selon l'invention.

On part d'un substrat 50, par exemple en silicium ou en céramique (fig. 7a). On dépose sur ce substrat une couche en matériau magnétorésistant, par exemple en alliage de fer, nickel, cobalt et/ou en multicouche FeNi/Ag. On grave cette couche pour ne laisser subsister que le ruban nécessaire MR. La largeur de l'élément magnétorésistant doit être supérieure à celle de l'entrefer. On prendra par exemple cette largeur égale à 6 µm.

On dépose ensuite une couche électriquement conductrice par exemple en CrAu, TiWAu, MoAu. On peut procéder par pulvérisation cathodique. On grave cette couche pour ne laisser subsister que des contacts 52,54 à chaque extrémité de l'élément magnétorésistant (fig. 7b). On dépose ensuite une couche de matériau isolant et amagnétique 56, par exemple en SiO₂ (fig. 7c). On dépose ensuite une couche conductrice puis une couche magnétique douce, par exemple par pulvérisation cathodique ou évaporation sous vide. Cette couche peut être un alliage de fer, par exemple en FeNi, en Sendust (marque déposée) ou en alliage de cobalt, par exemple en CoZrNb. L'épaisseur peut être de 0,2 µm. On grave ces deux couches pour leur donner la forme d'un ruban.

On poursuit la réalisation de la tête comme décrit dans les documents cités plus haut. Si l'on ne désire qu'une tête de lecture, on ne formera pas de bobinage conducteur autour du circuit magnétique. Si l'on veut obtenir une tête de lecture et d'écriture un tel bobinage devra être constitué.

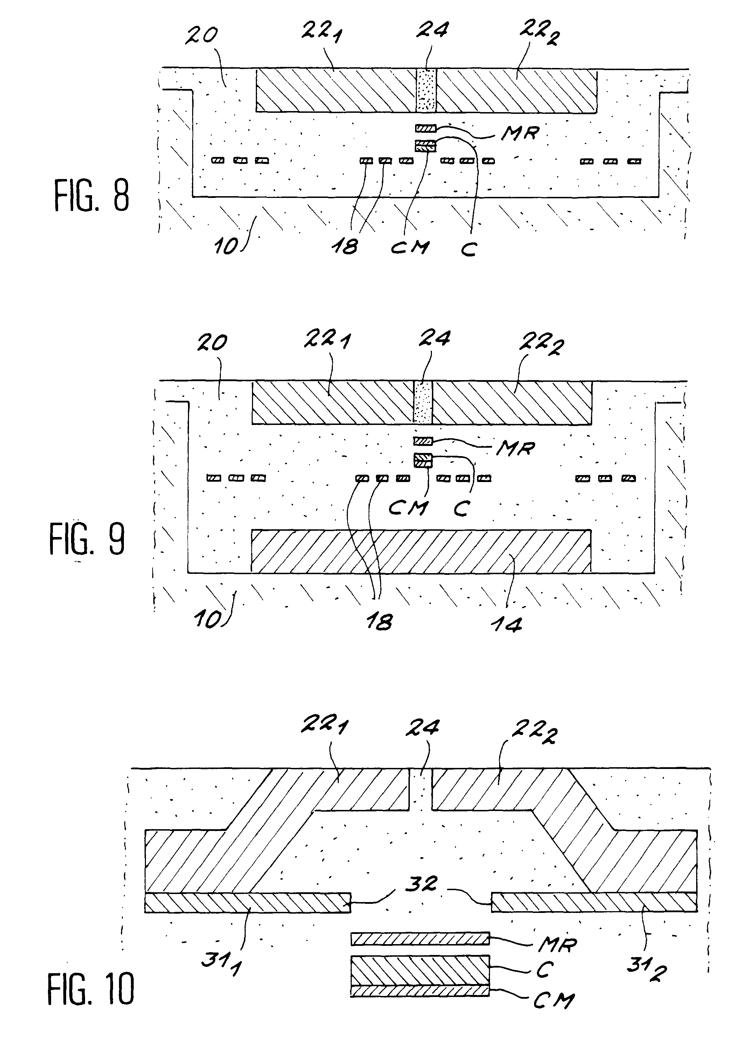

La figure 8 illustre une tête de lecture et d'écriture du type de celle qui est décrite dans le document FR-A-2 657 189 déjà cité. On y retrouve le substrat 10, le bobinage conducteur 18 noyé dans l'isolant 20 ainsi que les pièces polaires 22₁, 22₂ et l'entrefer 24 sous forme d'espaceur amagnétique 24, mais aucune autre pièce polaire. L'élément magnétorésistant MR est placé directement sous l'espaceur amagnétique 24. Le conducteur de polarisation C est placé sous l'élément MR et la couche magnétique supplémentaire CM, propre à l'invention, sous le conducteur C.

La tête magnétique représentée sur la figure 9 ne diffère de celle de la figure 8 que par la présence d'une pièce magnétique inférieure 14.

Enfin, la figure 10 montre une tête d'un type connu tel qu'illustré sur la figure 2, mais dans laquelle l'ensemble élément magnétorésistant MR-conducteur de polarisation C-couche magnétique supplémentaire CM est placé non plus au-dessus mais en dessous de l'entrefer 32.

## Revendications

1. Tête magnétique de lecture horizontale à couches minces comprenant un circuit magnétique avec au moins deux pièces polaires supérieures (22₁, 22₂) séparées par un entrefer (24), un élément magnétorésistant (MR) fermant au moins en partie le circuit magnétique et des moyens de polarisation de l'élément magnétorésistant comprenant un conducteur (C) ayant une face (f1) tournée vers l'élément magnétorésistant (MR) et une face (f2) opposée à cet élément (MR), ce conducteur étant parcouru par un courant électrique créant un champ magnétique de polarisation se refermant en partie à travers l'élément magnétorésistant (MR), cette tête magnétique étant caractérisée par le fait qu'elle comprend en outre des moyens pour canaliser la partie du champ magnétique de polarisation qui ne se referme pas à travers l'élément magnétorésistant (MR) et réduire la fuite de cette partie vers le circuit magnétique, ces moyens consistant en une couche magnétique (CM) disposée sur le conducteur de polarisation (C), côté face opposée (f2) à l'élément magnétorésistant (MR).

2. Tête magnétique selon la revendication 1, caractérisée par le fait que l'élément magnétorésistant (MR) est en contact avec le conducteur (C).

3. Tête magnétique selon la revendication 1, caractérisée par le fait que la couche magnétique supplémentaire (CM) est en alliage à base de fer.

4. Tête magnétique selon la revendication 3, caractérisée par le fait que la couche magnétique supplémentaire (CM) est en alliage fer-nickel.

5. Tête magnétique selon la revendication 1, caractérisée par le fait que la couche magnétique supplémentaire (CM) est en alliage à base de cobalt.

6. Tête magnétique selon la revendication 5, caractérisée par le fait que la couche magnétique supplémentaire (CM) est en alliage de cobalt-zirconium-niobium.

7. Tête magnétique selon la revendication 1, caractérisée par le fait que la couche magnétique supplémentaire (CM) présente une largeur égale ou sensiblement égale à la largeur du conducteur (C).

8. Tête magnétique selon l'une quelconque des revendications 1 à 7, caractérisée par le fait qu'elle comprend deux couches magnétiques (31₁, 31₂) en contact avec les deux pièces polaires supérieures (22₁, 22₂) et écartées l'une de l'autre par un autre entrefer (32) disposé sous l'entrefer (24) défini par les deux pièces polaires supérieures (22₁, 22₂), l'ensemble élément magnétorésistant (MR)-conducteur (C)-couche magnétique supplémentaire (CM) étant disposé en travers de cet autre entrefer (32).

9. Tête magnétique selon la revendication 8, caractérisée par le fait que l'ensemble élément magnétorésistant (MR)-conducteur (C)-couche magnétique supplémentaire (CM) est placé au-dessus de l'entrefer (32) défini par les deux couches magnétiques (32₁, 32₂).

10. Tête magnétique selon la revendication 8, caractérisée par le fait que l'ensemble élément magnétorésistant (MR)-conducteur (C)-couche magnétique supplémentaire (CM) est placé en dessous de l'entrefer (32) défini par les deux couches magnétiques (32₁, 32₂).

11. Tête magnétique selon l'une quelconque des revendications 1 à 7, caractérisée par le fait que l'élément magnétorésistant (MR) s'étend entre l'une des deux pièces polaires supérieure (22₁) et l'autre (22₂) et est en conctact avec ces pièces polaires supérieures, le conducteur (C) et la couche magnétique supplémentaire (CM) étant disposés entre l'élément magnétorésistant (MR) et l'entrefer (24).

12. Tête magnétique selon l'une quelconque des revendications 1 à 7, caractérisée par le fait que le circuit magnétique comprend deux pièces polaires supérieures (22₁, 22₂) définissant l'entrefer (24), l'élément magnétorésistant (MR) étant placé sous cet entrefer (24), le conducteur (C) sous cet élément (MR) et la couche magnétique supplémentaire (CM) sous le conducteur.

13. Tête magnétique selon la revendication 12, caractérisée par le fait que le circuit magnétique comprend, en outre, une pièce polaire inférieure (14) isolée des pièces polaires supérieures (22₁, 22₂).

## Claims

1. Thin film, horizontal, magnetic reading head comprising a magnetic circuit with at least two upper pole pieces (221, 222) separated by a head gap (24), a magnetoresistant element (MR) at least partly closing the magnetic circuit and means for polarizing the magnetoresistant element comprising a conductor (C) having a face (f1) turned towards the magnetoresistant element (MR) and a face (f2) opposite to said element (MR), through said conductor flows an electric current creating a magnetic polarization field partly closing through the magnetoresistant element (MR), said magnetic head being characterized in that it also comprises means for channelling that part of the magnetic polarization field not closing through the magnetoresistant element (MR) and reducing leakage of said part to the magnetic circuit, said means comprising a magnetic layer (CM) placed on the polarization conductor (C) on the face (f2) opposite to the magnetoresistant element (MR).

2. Magnetic head according to claim 1, characterized in that the magnetoresistant element (MR) is in contact with the conductor (C).

3. Magnetic head according to claim 1, characterized in that the supplementary magnetic layer (CM) is of iron-based alloy.

4. Magnetic head according to claim 3, characterized in that the supplementary magnetic layer (CM) is of iron-nickel alloy.

5. Magnetic head according to claim 1, characterized in that the supplementary magnetic layer (CM) is of cobalt-based alloy.

6. Magnetic head according to claim 5, characterized in that the supplementary magnetic layer (CM) is of cobalt-zirconium-niobium alloy.

7. Magnetic head according to claim 1, characterized in that the supplementary magnetic head (CM) has a width equal or substantially equal to the width of the conductor (C).

8. Magnetic head according to any one of the claims 1 to 7, characterized in that it has two magnetic layers (31₁, 31₂) in contact with the two other pole pieces (221, 222) and spaced from one another by another head gap (32) placed beneath the head gap (24) defined by the two upper pole pieces (221, 222), the assembly of the magnetoresistant element (MR) - conductor (C)-supplementary magnetic layer (CM) being placed through said other head gap (32).

9. Magnetic head according to claim 8, characterized in that the assembly of the magnetoresistant element (MR) - conductor (C) - supplementary magnetic layer (CM) is placed above the head gap (32) defined by the two magnetic layers (321, 322).

10. Magnetic head according to claim 8, characterized in that the assembly of the magnetoresistant element (MR) - conductor (C) - supplementary magnetic layer (CM) is placed below the head gap (32) defined by the two magnetic layers (321, 322).

11. Magnetic head according to any one of the claims 1 to 7, characterized in that the magnetoresistant element (MR) extends between one of the two upper pole pieces (221) and the other pole piece (22₂) and is in contact with said upper pole pieces, the conductor (C) and the supplementary magnetic layer (CM) being placed between the magnetoresistant element (MR) and the head gap (24).

12. Magnetic head according to any one of the claims 1 to 7, characterized in that the magnetic circuit has two upper pole pieces (221, 222) defining the head gap (24), the magnetoresistant element (MR) being placed beneath said head gap (24), the conductor (C) beneath said element (MR) and the supplementary magnetic layer (CM) beneath the conductor.

13. Magnetic head according to claim 12, characterized in that the magnetic circuit also has a lower pole piece (14) insulated from the upper pole pieces (22₁, 22₂).

## Patentansprüche

1. Horizontaler Dünnschichten-Lesemagnetkopf mit einem wenigstens zwei obere, durch einen Spalt (24) getrennte Polstücke (22₁, 22₂) umfassenden Magnetkreis, wobei ein magnetoresistives Element (MR) den Magnetkreis wenigstens teilweise schließt und Vormagnetisierungsmittel des magnetoresitiven Elements einen Leiter (C) mit einer dem magnetoresistiven Element (MR) zugewandten Seite (f1) und einer von diesem Element (MR) abgewandten Seite (f2) umfassen, dieser Leiter von einem elektrischen Strom durchflossen wird, der ein Vormagnetisierungsfeld erzeugt, das sich teilweise durch das magnetorsistive Element (MR) schließt, und dieser Magnetkopf dabei
**dadurch gekennzeichnet** ist, dass er außerdem Mittel umfasst, um den Teil des Vormagnetisierungsfelds, der nicht durch das magnetoresistive Element (MR) geschlossen wird, zu kanalisieren und die Ableitung dieses Teils in den Magnetkreis zu reduzieren, wobei diese Mittel durch eine Magnetschicht (CM) gebildet werden, die auf dem Vormagnetisierungsleiter (C) auf der von dem magnetoresistiven Element (MR) abgewandten Seite (f2) vorgesehen ist.

2. Magnetkopf nach Anspruch 1, dadurch gekennzeichnet, dass das magnetoresistive Element (MR) Kontakt hat mit dem Leiter (C).

3. Magnetkopf nach Anspruch 1, dadurch gekennzeichnet, dass die zusätzliche Magnetschicht (CM) aus einer Legierung auf Eisenbasis ist.

4. Magnetkopf nach Anspruch 3, dadurch gekennzeichnet, dass die zusätzliche Magnetschicht (CM) aus Eisen-Nickel-Legierung ist.

5. Magnetkopf nach Anspruch 1, dadurch gekennzeichnet, dass die zusätzliche Magnetschicht (CM) aus einer Legierung auf Kobaltbasis ist.

6. Magnetkopf nach Anspruch 5, dadurch gekennzeichnet, dass die zusätzliche Magnetschicht (CM) aus einer Kobalt-Zirkon-Niobium-Legierung ist.

7. Magnetkopf nach Anspruch 1, dadurch gekennzeichnet, dass die zusätzliche Magnetschicht (CM) eine Breite hat, die gleich oder im Wesentlichen gleich der Breite des Leiters (C) ist.

8. Magnetkopf nach einem der Ansprüche 1 bis 7, dadurch gekennzeichnet, dass er zwei Magnetschichten (31₁, 31₂) umfasst, die mit beiden oberen Polstücken (22₁, 22₂) Kontakt haben und die durch einen anderen bzw. weiteren Spalt (32) voneinander beabstandet sind, definiert durch die beiden oberen Polstücke (22₁, 22₂), wobei der Aufbau aus magnetoresistivem Element (MR), Leiter (C) und zusätzlicher Magnetschicht (CM) quer über diesem weiteren Spalt (32) angeordnet ist.

9. Magnetkopf nach Anspruch 8, dadurch gekennzeichnet, dass der Aufbau aus magnetoresistivem Element (MR), Leiter (C) und zusätzlicher magnetischer Schicht (CM) sich über dem Spalt (32) befindet, der durch die beiden Magnetschichten (32₁, 32₂) definiert wird.

10. Magnetkopf nach Anspruch 8, dadurch gekennzeichnet, dass der Aufbau aus magnetoresistivem Element (MR), Leiter (C) und zusätzlicher magnetischer Schicht (CM) sich unter dem Spalt (32) befindet, der durch die beiden Magnetschichten (32₁, 32₂) definiert wird.

11. Magnetkopf nach einem der Ansprüche 1 bis 7, dadurch gekennzeichnet, dass das magnetoresistive Element (MR) sich zwischen dem einen (22₁) und dem anderen (22₂) der beiden oberen Polstücke erstreckt und mit diesen oberen Polstücken Kontakt hat, wobei der Leiter (C) und die zusätzliche Magnetschicht (CM) zwischen dem magnetoresistiven Element (MR) und dem Spalt (24) angeordnet sind.

12. Magnetkopf nach einem der Ansprüche 1 bis 7, dadurch gekennzeichnet, dass der Magnetkreis zwei obere Polstücke (22₁, 22₂) umfasst, die den Spalt (24) definieren, wobei das magnetoresistive Element (MR) sich unter diesem Spalt befindet, der Leiter (C) sich unter diesem Element (MR) befindet und die zusätzliche Magnetschicht (CM) unter dem Leiter.

13. Magnetkopf nach Anspruch 12, dadurch gekennzeichnet, dass der Magnetkreis außerdem ein unteres Polstück (14) umfasst, isoliert bzw. getrennt von den beiden oberen Polstücken (22₁, 22₂).
